(19) Europäisches Patentamt
European Patent Office
Office européen des brevets

(11) **EP 2 321 769 B1**

(12) **FASCICULE DE BREVET EUROPEEN**

(45) Date de publication et mention
de la délivrance du brevet:
**31.08.2016 Bulletin 2016/35**

(51) Int Cl.:
**G06K 9/52** (2006.01)          **G06K 9/62** (2006.01)
**H04N 19/97** (2014.01)

(21) Numéro de dépôt: **09811097.6**

(22) Date de dépôt: **13.08.2009**

(86) Numéro de dépôt international:
**PCT/EP2009/060477**

(87) Numéro de publication internationale:
**WO 2010/026028 (11.03.2010 Gazette 2010/10)**

(54) **PROCÉDÉ DE RECONNAISSANCE DE FORMES ET SYSTÈME METTANT EN OEUVRE LE PROCÉDÉ**

VERFAHREN ZUR ERKENNUNG VON FORMEN UND SYSTEM ZUR ANWENDUNG DIESES VERFAHRENS

METHOD FOR RECOGNISING SHAPES AND SYSTEM IMPLEMENTING SAID METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.09.2008 FR 0804880**

(43) Date de publication de la demande:
**18.05.2011 Bulletin 2011/20**

(73) Titulaire: **COMMISSARIAT A L'ENERGIE ATOMIQUE ET AUX ENERGIES ALTERNATIVES**
**75015 Paris (FR)**

(72) Inventeurs:
• **MERCIER, David**
**F-91410 Dourdan (FR)**
• **LARUE, Anthony**
**F-75014 Paris (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**WO-A2-2006/106508**

• **RALPH NEFF ET AL: "Matching Pursuit Video Coding-Part I: Dictionary Approximation" IEEE TRANSACTIONS ON CIRCUITS AND SYSTEMS FOR VIDEO TECHNOLOGY, IEEE SERVICE CENTER, PISCATAWAY, NJ, US, vol. 12, no. 1, 1 janvier 2002 (2002-01-01), XP011014266 ISSN: 1051-8215**
• **HO Y C ET AL: "Simple Explanation of the No-Free-Lunch Theorem and Its Implications" JOURNAL OF OPTIMIZATION THEORY AND APPLICATIONS, PLENUM PRESS, LONDON, GB, vol. 115, no. 3, 1 décembre 2002 (2002-12-01), pages 549-570, XP009097277 ISSN: 0022-3239**
• **CHUNG-LIN HUANG ET AL: "Road sign interpretation using matching pursuit method" PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 1, 3 septembre 2000 (2000-09-03), pages 329-333, XP010533557 ISBN: 978-0-7695-0750-7**
• **MENDELS F ET AL: "Rotation and scale invariant shape representation and recognition using matching pursuit" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 4, 11 août 2002 (2002-08-11), pages 326-329, XP010613533 ISBN: 978-0-7695-1695-0**

- VANDERGHEYNST P ET AL: "Efficient image representation by anisotropic refinement in matching pursuit" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, vol. 3, 7 mai 2001 (2001-05-07), pages 1757-1760, XP010802930 ISBN: 978-0-7803-7041-8

- SMITH E ET AL: "Efficient coding of time-relative structure using spikes" NEURAL COMPUTATION, MASSACHUSETTS INSTITUTE OF TECHNOLOGY, US, vol. 17, no. 1, 1 janvier 2005 (2005-01-01), pages 19-45, XP009115094 ISSN: 0899-7667

**Description**

L'invention concerne un procédé de reconnaissance de formes et un système mettant en oeuvre le procédé. Elle s'applique notamment aux domaines de la reconnaissance de signaux sismiques, biomédicaux et de la reconnaissance de mouvements ou de gestes, par exemple la reconnaissance d'écriture manuscrite.

Un système de reconnaissance de formes comporte traditionnellement deux modules de traitement principaux. La nature des entrées du système peut être très diverse : données représentées sous forme de vecteurs, signaux temporels, images, vidéos. Il peut s'agir de données issues directement de capteurs ou ayant déjà subi des traitements, comme un filtrage ou une fusion de données par exemple.

Le premier module réalise un prétraitement et code les entrées du système. Le but recherché est de présenter l'information contenue dans les entrées de la manière la plus explicite possible. Le second module de traitement réalise la reconnaissance proprement dite en utilisant le code généré par le premier module. Cette opération, appelée également discrimination, est facilitée lorsque le prétraitement est efficace, c'est-à-dire que le codage réalisé est le plus informatif possible. Le choix de la méthode de prétraitement est donc capital pour optimiser un système de reconnaissance.

Les méthodes de prétraitement habituellement utilisées dans un tel système dépendent du type d'entrée à traiter.

Dans le cas de systèmes de reconnaissance traitant des données, l'entrée du module de prétraitement consiste en un vecteur. Ce vecteur peut être décomposé linéairement en une série de composantes. Pour un vecteur s donné, en disposant d'une base de N composantes $\Psi_j$ de même dimension que s, la décomposition linéaire mène à l'équation de décomposition exprimée ci-dessous :

$$\mathbf{s} = \sum_{i=1}^{N} \beta_j \mathbf{\psi}_j \qquad (1)$$

Les variables $\beta_j$ sont associées aux composantes $\Psi_j$ et sont le résultat de la décomposition. Les composantes $\Psi_j$ sont habituellement orthonormées, ce qui simplifie considérablement le calcul des $\beta_j$ en le restreignant à un produit scalaire. Il est par ailleurs usuel que la base ne génère pas l'ensemble de l'espace. C'est le cas si $N$ est inférieur à la dimension des données. Dans ce cas, une erreur de reconstruction e est ajoutée à l'équation (1) :

$$\mathbf{s} = \sum_{i=1}^{N} \beta_j \mathbf{\psi}_j + \mathbf{e} \qquad (2)$$

Les méthodes classiques de décomposition de données comme par exemples l'analyse en composante principales (ACP), l'analyse en composantes indépendantes (ACI) ou l'analyse discriminative linéaire (LDA), déterminent les composantes $\Psi_j$ à utiliser par apprentissage en utilisant des bases de données de vecteurs d'entrée. Un inconvénient de ces méthodes limitant leur efficacité est qu'elles n'ont aucun sens physique propre au phénomène traité.

Dans le cas de systèmes de reconnaissance traitant des signaux, le signal source s($t$) à traiter peut être exprimé comme une combinaison linéaire d'atomes. Si le signal échantillonné à traiter s($t$) est monodimensionnel et de longueur $T$, celui-ci est décomposé en utilisant une base composée de $N$ atomes $\Psi_j(t)$ de longueur $T$. Le signal peut alors s'écrire :

$$\mathrm{s}(t) = \sum_{i=1}^{N} \beta_j \psi_j\left(t\right) \qquad (3)$$

Le résultat de la décomposition est la valeur de l'ensemble des variables $\beta_j$ associées aux atomes $\Psi_j(t)$. Cette notation est étendue à la décomposition de signaux multidimensionnels. Le signal s($t$) est alors exprimé comme combinaison linéaire d'atomes $\Psi_j(t)$ de même dimensions que s(t). Tout comme pour les vecteurs, les atomes peuvent ne pas générer l'ensemble de l'espace et une erreur de reconstruction e(t) est prise en compte donnant :

$$\mathbf{s}(t) = \sum_{i=1}^{N} \beta_j \mathbf{\psi}_j\left(t\right) + \mathbf{e}\left(t\right) \qquad (4)$$

En prenant l'exemple d'une décomposition par transformée de Fourier, les atomes sont des fonctions exponentielles complexes ou bien des fonctions sinus et cosinus. Un atome correspond alors à un signal mono-fréquentiel pur et ces fonctions sont indicées par fréquence.

La base de décomposition peut être également générée à partir de signaux plus courts, nommés noyaux, auxquels on fait subir diverses transformations pour générer tous les atomes. Ce principe est utilisé, par exemple, par la transformée en ondelette : les atomes sont construits à partir d'un seul noyau appelé ondelette mère. Ce noyau subit d'une part un changement d'échelle et d'autre part un décalage temporel. Ces opérations menées sur le même noyau mènent à une base de plusieurs atomes utilisés pour la décomposition du signal. Chaque atome est alors associé à une échelle et à une valeur de retard.

Les algorithmes usuels réalisant la décomposition de signaux ont souvent un sens principalement mathématique ou un sens physique très générique comme la présence d'une fréquence dans le cas de l'utilisation de la transformée de Fourier. Dans la grande majorité des cas, l'information pertinente après prétraitement reste présentée de manière distribuée. Une conséquence est que le codage réalisé est alors peu parcimonieux. L'algorithme utilisé pour la phase de reconnaissance aura un travail important à réaliser de part la faible efficacité du prétraitement.

L'expérience dans des domaines très étudiés, comme le traitement de la parole, montre à quel point la spécialisation du prétraitement au problème considéré améliore les performances.

Les travaux de E.C. Smith et M.S. Lewicki présentés dans les articles Efficient coding of time-relative structure using spikes, Neural Computation, vol. 17, p. 19-45, 2005 et Efficient auditory coding, Nature, vol. 439, n°23, p. 978-982, 2006, traitent le cas du traitement de la parole. Plutôt que d'utiliser une base de noyaux définie à priori, la solution propose de déterminer les noyaux pertinents pour le codage par un mécanisme d'apprentissage. L'apprentissage des noyaux s'appuie sur une base d'apprentissage contenant des signaux propres à la source, tels que des sons d'ambiance, des vocalisations animales ou humaines ou un mélange des deux. Suite à cette phase d'apprentissage, les sons peuvent être décomposés en éléments acoustiques discrets caractéristiques de la structure des signaux et optimaux pour son codage. Les noyaux obtenus sont différents suivant le type de signaux composant la base d'apprentissage. Pour le cas de signaux d'apprentissage composés de sons d'ambiance et des vocalisations, les noyaux trouvés correspondent aux réponses impulsionnelles des filtres de la cochlée chez les mammifères. Le codage produit est plus performant que les codages classiques comme ceux réalisés par transformées de Fourier ou en ondelettes au sens où il produit un code parcimonieux, dit aussi "code creux".

Certaines méthodes existantes de prétraitement permettent de sélectionner un sous ensemble de noyaux dans une base de noyaux de manière à ce que le codage s'adapte, par exemple, à la nature instantanée du signal; par exemple comme exposé dans les publications "Road sign interpretation using matching pursuit method" (S-H Hsu, CL Huang), "Efficient image representation by anisotropic refinement" (P. Vandergheynst, P. Frossard) ou le document de brevet WO 2006/106508. Mais dans ce cas, la base de noyaux est définie à priori et les noyaux ne sont pas adaptés à la réalité physique du signal. L'algorithme de codage proposé par E.C. Smith et M.S. Lewicki permet d'adapter les noyaux à la source mais n'est pas appliqué au domaine de la reconnaissance de formes et n'est pas optimisé pour le traitement de signaux ou de données représentés sur plusieurs dimensions. Des applications de reconnaissance de forme comme par exemple l'analyse de signaux sismiques et la reconnaissance d'écriture ou plus généralement la reconnaissance de mouvement nécessitent un traitement multidimensionnel. C'est également le cas, par exemple, pour des applications médicales comme l'électrocardiogramme ECG, l'électroencéphalogramme EEG ou le magnétoencéphalogramme MEG.

Un but de l'invention est notamment de palier les inconvénients précités.

A cet effet l'invention a pour objet un procédé de reconnaissance de formes comme défini dans la revendication 1.

Pendant la phase d'apprentissage, les noyaux sont adaptés, par exemple, en minimisant la fonction de coût sur la base de données de signaux représentatifs de la source à traiter grâce à une méthode de descente de gradient stochastique.

Pendant la phase d'apprentissage, les noyaux peuvent être adaptés en minimisant la fonction de coût sur la base de données de signaux représentatifs de la source à traiter grâce à l'algorithme de Levenberg-Marquart, ledit algorithme étant appliqué suite au calcul d'un Hessien moyen pour chacun desdits noyaux.

Pendant la phase d'apprentissage, les noyaux peuvent être adaptés en minimisant la fonction de coût sur la base de données de signaux représentatifs de la source à traiter grâce à la méthode de descente de gradient par propagation résistante.

Les formes à reconnaître permettent, par exemple, d'identifier des anomalies cardiaques.

Les formes à reconnaître sont, par exemple, représentatives de mouvements ou de gestes.

Les formes à reconnaître représentatives de mouvements ou de gestes sont, par exemple, des caractères ou des suites de caractères d'écriture manuscrite.

Les formes à reconnaître permettent, par exemple, d'identifier un type d'activité cérébrale.

Les formes à reconnaître permettent, par exemple, d'identifier la présence de molécules ou de groupes de molécules dans un échantillon étudié par spectrométrie de masse.

Durant la phase de codage, l'étape de recherche de meilleurs atomes utilisés pour la décomposition de la portion de signal en cours de traitement applique, par exemple, une rotation sur les noyaux, chaque atome retenu pour la décomposition étant ainsi composé d'un noyau, d'un index de décalage et d'un facteur de rotation, lesdits atomes retenus étant associés à un coefficient de décomposition.

Durant la phase de codage, le facteur de rotation des noyaux est, par exemple, un matrice carrée représentant la rotation appliquée à chaque noyau sélectionné, les éléments de ladite matrice étant déterminés durant la phase de codage du procédé en prenant plusieurs hypothèses de rotation pour chaque noyau et chaque instant dans le but de sélectionner la meilleure hypothèse de rotation.

Le procédé traite, par exemple, un signal source à deux dimensions et ledit signal ainsi que les noyaux de la transformée sont représentés par des nombres complexes, la partie réelle de ces nombres complexes correspondant à la première dimension et la partie imaginaire correspondant à la seconde dimension. Les coefficients de décompositions sont alors complexes de manière à ce que leur phase représente le facteur de rotation et permettent d'appliquer un angle de rotation aux noyaux.

Le procédé traite, par exemple, des signaux à trois dimensions et lesdits signaux ainsi que les noyaux de la transformée sont représentés par des quaternions. Les coefficients de décompositions sont alors des quaternions et permettent d'appliquer une rotation 3D aux noyaux.

La phase de codage met en oeuvre, par exemple, une méthode de poursuite de base.

La phase de codage met en oeuvre, par exemple, une méthode de poursuite adaptative.

La méthode de poursuite adaptative pouvant être utilisée durant la phase de codage est, par exemple, de type orthogonale, les coefficients de décomposition étant mis à jour après chaque sélection d'un nouvel atome en projetant le signal à traiter sur la base composée des atomes déjà retenus.

La phase de codage pour un signal en cours de traitement se termine, par exemple, lorsque le nombre d'atome sélectionné atteint une valeur maximum.

La phase de codage pour un signal en cours de traitement se termine, par exemple, lorsqu'une valeur relative minimum choisie du dernier coefficient de décomposition par rapport à la plus grande valeur des autres coefficients précédemment calculés n'est plus assurée.

La phase de codage pour une portion de signal en cours de traitement se termine, par exemple, lorsque l'énergie du résidu de la décomposition passe en dessous d'une valeur seuil choisie à partir de laquelle le codage est considéré efficace.

L'invention a aussi pour objet un système de reconnaissance de formes mettant en oeuvre le procédé comportant au moins :

- un capteur ou un réseau de capteurs produisant en sortie des signaux monodimensionnels ou multidimensionnels ;
- un module de prétraitement mettant en oeuvre le procédé selon l'invention et permettant d'exécuter les phases d'apprentissage et/ou de codage dudit procédé ;
- un module de reconnaissance permettant de réaliser des fonctions d'analyse et/ou de détection et/ou de reconnaissance de formes ;
- un module d'exploitation des résultats.

Le système de reconnaissance de formes comporte, par exemple, un ou plusieurs modules de communications permettant d'implanter les autres modules du système sur au moins deux équipements physiques distants et leurs permettant d'échanger leurs résultats.

Le système de reconnaissance de formes comporte, par exemple, au moins un module de stockage connecté au module de prétraitement, les résultats dudit prétraitement pouvant être mémorisés dans le module de stockage et le module de stockage pouvant être déconnecté du module de traitement pour être connecté au module de reconnaissance situé sur un équipement distant pour que les résultats du prétraitement y soient exploités.

L'invention a notamment comme avantage de pouvoir adapter les noyaux utilisés pour la décomposition au type de sources à traiter et ainsi d'être applicable dans le cadre d'applications différentes comme par exemple l'électrocardiogramme ou la reconnaissance de mouvement. L'invention a également comme avantage de pouvoir traiter des signaux multidimensionnels et d'être appliquée avec un nombre réduit de noyaux de par la gestion des rotations. L'invention propose en outre une méthode d'apprentissage des noyaux permettant de converger plus rapidement vers la solution optimale que la méthode existante.

D'autres caractéristiques et avantages de l'invention apparaitront à l'aide de la description qui suit donnée à titre illustratif et non limitatif, faite en regard des dessins annexés parmi lesquels :

- la figure 1 illustre la phase de codage par transformée à noyaux adaptés du procédé selon l'invention ;
- la figure 2 illustre la phase d'apprentissage des noyaux du procédé selon l'invention ;
- la figure 3 présente un exemple de dispositif de reconnaissance mettant en oeuvre le procédé selon l'invention.

Dans la suite de la description, une entrée à traiter, qui sera appelée également signal source dans la suite du document, fait notamment référence à un vecteur de dimension N ou bien à une collection indexée de vecteurs de dimension N.

Dans le cas ou le signal source fait référence à une collection d'échantillons de dimension N, celui-ci peut être composé, par exemples :

- d'une suite d'échantillons monodimensionnels indexés temporellement provenant par exemple d'une source sonore échantillonnée ;
- d'une suite d'échantillons monodimensionnels indexés spatialement par leur position x et $y$ provenant par exemple d'une image en niveau de gris ;
- d'une suite d'échantillons multidimensionnels indexés temporellement, provenant par exemple d'un capteur multidimensionnel de mouvement (accéléromètre 3 directions) ou d'un réseau de capteurs sismiques ;
- d'une suite d'échantillons multidimensionnels indexés spatialement provenant par exemple d'une image couleur ou hyperspectrale : les dimensions du vecteur, c'est-à-dire des pixels, étant les couleurs (Rouge, Vert et Bleu) ou les bandes de fréquences de l'image hyperspectrale, l'indexation se faisant selon la position x et $y$ du pixel ;
- d'une suite d'échantillons mono ou multidimensionnels indexés spatio-temporellement provenant par exemple d'une vidéo avec des index x, $y$ et $t,$ ou encore d'une simulation virtuelle 4D ($x, y, z$ et $t$) ;
- d'une suite d'échantillons mono ou multidimensionnels indexés par une ou plusieurs variables n'ayant pas nécessairement une signification spatiale ou temporelle, par exemple provenant de transformées de Fourier appliquées sur les différentes stations d'un réseau sismique et produisant ainsi une collection d'échantillons multidimensionnels (une dimension par station) indexée par la fréquence.

Une transformation élémentaire du signal consiste à créer un nouveau signal à partir du signal source par soustraction de valeurs de décalage aux valeurs d'indexation. Dans le cas d'un signal indexé temporellement, ces valeurs de décalage correspondent à l'application d'un retard. Ce retard peut être négatif ce qui alors fait avancer temporellement le signal. Dans le cas d'une image indexée spatialement en ($x, y$) ou d'une représentation 3D indexée en ($x, y, z$), ces valeurs de décalage correspondent à une translation. Pour une vidéo ($x, y, t$) ou une simulation virtuelle 4D ($x, y, z, t$) le terme de translation ou de retard selon l'index considéré est utilisé. Dans le cas où les index sont des fréquences, les valeurs de décalage correspondent à des décalages fréquentiels.

Dans la suite de la description, pour des raisons de simplifications des écritures et sauf précisions, le signal source sera noté s(t), comme un signal temporel multidimensionnel. Cette écriture n'est toutefois aucunement limitative, t pouvant dans la pratique être un ensemble d'indice, par exemples x et $y$ dans une image ou ($x, y, t$) dans une vidéo et s pouvant être monodimensionnel. De même nous emploierons le terme de "décalage" pour faire référence à toute transformation du signal se faisant par la manipulation des index via des valeurs de décalage, incluant ainsi les cas particuliers du retard et de la translation. Toutes les données associées au signal source, telles que les noyaux et résidus suivent la même règle d'écriture.

Afin d'illustrer le cas ou le signal source fait référence à un vecteur, l'exemple de la spectrométrie de masse est utile. Un vecteur de résultat représentant le spectre de masse est alors composé de plusieurs milliers de composantes, chacune correspondant à un rapport masse sur charge des molécules sur lesquelles sont conduites les mesures, et également appelé canal.

Le procédé de prétraitement selon l'invention comporte une phase de codage et une phase d'apprentissage.

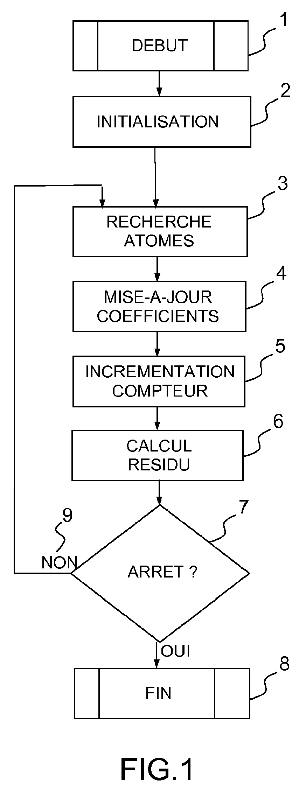

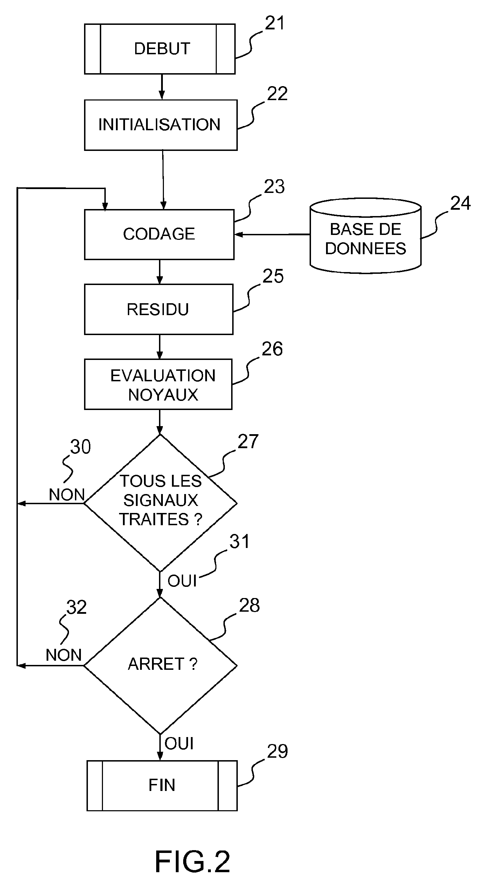

La phase d'apprentissage permet d'adapter les noyaux utilisés pour le codage de la source à coder. Les noyaux ainsi trouvés seront ensuite utilisés pendant la phase de codage. Les figures 1 et 2 illustrent deux exemples de mise en oeuvre des deux phases du procédé selon l'invention. Le procédé selon l'invention peut être utilisé dans le cadre de diverses applications de reconnaissances de formes. Par exemple, le procédé pourra être mis en oeuvre dans le cadre de l'analyse d'électrocardiogrammes. Dans ce cas la phase d'apprentissage du procédé identifiera quelques noyaux utilisés pour décomposer l'impulsion cardiaque. D'autres applications possibles au sein desquelles la mise en oeuvre du procédé est utile sont notamment la reconnaissance des signaux sismiques, la reconnaissance de mouvements et l'analyse d''électroencéphalogrammes et/ou magnétoencéphalogrammes dont le but est d'identifier la réaction de certaines zones du cerveau.

Le figure 1 présente un exemple de diagramme illustrant la phase de codage du procédé selon l'invention. Cette phase de codage a pour but de décomposer un signal vectoriel en composantes vectorielles élémentaires, ces composantes élémentaires étant appelées atomes.

Le procédé selon l'invention permet de traiter des informations multidimensionnelles représentées sous forme vectorielle, les dimensions des vecteurs pouvant être traitées conjointement. Cela est utile lorsque l'application pour laquelle le procédé est utilisé s'appuie sur un ou plusieurs capteurs fournissant des informations multidimensionnelles. A titre d'exemple, des capteurs liés aux gestes fourniront des informations pouvant être tridimensionnelles. Dans le cas de capteurs biomédicaux, leurs données de sortie sont représentées avec un grand nombre de dimensions, par exemple douze dimensions pour l'électrocardiogramme, plusieurs dizaines pour l'électroencéphalogramme et plusieurs centaines pour le magnétoencéphalogramme.

Toutefois le traitement conjoint de toutes les dimensions de l'entrée du système n'est pas une obligation et un module de prétraitement peut travailler sur un signal constitué d'un sous-groupe de variables, c'est-à-dire un sous groupe de dimensions. Un cas limite est la situation où le prétraitement est fait pour chaque dimension (chaque groupe est de cardinal 1, autant de groupes que de dimensions). On a alors autant de modules de prétraitement que de dimensions et chaque module traite un signal monodimensionnel.

Cette manière d'utiliser plusieurs modules implémentant le procédé selon l'invention sur des signaux sources différents permet également de décliner l'application dans le cas où il y a plusieurs entrées hétérogènes. C'est le cas, par exemple, d'un module de reconnaissance de la parole qui utilise à la fois un flux sonore (signal monodimensionnel indexé par le temps, avec une fréquence d'échantillonnage de 16kHz) et un flux vidéo (signal tridimensionnel rouge-vert-bleu indexé par la position dans l'image (*x,y*) et par le temps, avec une fréquence d'échantillonnage de 25Hz). Le système de reconnaissance utilise alors, par exemple, un module de prétraitement selon l'invention pour le prétraitement du flux audio, et un module de prétraitement selon l'invention pour le prétraitement du flux vidéo, les sorties des deux modules étant alors utilisées pour la discrimination.

Cette décomposition est réalisée grâce à l'utilisation d'une technique de décomposition creuse telle les méthodes de poursuite comme par exemples les méthodes connues sous les terminologies anglo-saxonnes de « Matching pursuit » et de « Basis pursuit ». Le signal après décomposition prend la forme suivante :

$$\mathbf{s}(t) = \sum_{m=1}^{M} \sum_{i=1}^{I_m} \alpha_i^m \phi_m \left( t - \tau_i^m \right) + \mathbf{e}(t) \tag{5}$$

Cela correspond à un cas particulier de l'équation (4), restreinte aux *j* tel que $\beta_j$ soit non nul. La famille de tous les atomes $\{\Psi_j(t)\}_j$ de l'équation (4) correspond ici à la famille $\{\{\phi_m(t-\tau)\}_\tau\}_m$ contenant tous les décalages temporels possibles de chaque noyaux. Il est établit dans (5) des relations de correspondance simplifiant l'écriture de l'équation (4) dans ce cas particulier. Ainsi les valeurs $I_m$ $\alpha_i^m$ et $\tau_i^m$ sont établies de manière à ce que pour tout indice j de l'équation (4) tel que $\beta_j$ soit non nul, il existe *m, $I_m$, i≤$I_m$* $\alpha_i^m$ et $\tau_i^m$ tels que : $\psi_j(t) = \phi_m(t-\tau_i^m)$ et $\beta_j = \alpha_i^m$.

Les atomes $\phi_m(t - \tau_i^m)$ permettant de décomposer le signal ont la même dimension que le signal source. De façon générique, ces derniers sont générés par décalages des noyaux suivant leur index. Dans cet exemple, les index sont des index temporels et les décalages correspondent à des retards.

Pour chacun des *M* noyaux utilisés, $I_m$ décalages temporels du noyau permettent de générer $I_m$ atomes nécessaires à la décomposition. Les noyaux sont déterminés lors de la phase d'apprentissage du procédé selon l'invention. Cette phase d'apprentissage sera expliquée plus loin dans la description à l'aide de la figure 2. Le terme d'erreur e(t) appelé résidu représente la partie du signal n'ayant pu être décomposée par les atomes sélectionnés par l'algorithme de décomposition.

Une méthode pour exécuter la phase de codage est d'optimiser de façon itérative le nombre d'atomes utilisés pour décomposer le signal. Pour cela, une approche de type poursuite adaptative orthogonale ("Orthogonal Matching Pursuit"), amélioration de la méthode classique « matching pursuit », est appliquée. Cette méthode itérative retient successivement les atomes les plus corrélés au résidu. Cet algorithme possède de bonnes propriétés de décroissance de l'erreur et de souplesse de mise en oeuvre. Dans le cas d'une base construite à partir de quelques noyaux dupliqués en chaque instant comme cela est le cas pour la transformée à noyaux adaptatifs, les calculs peuvent être accélérés grâce à la convolution non cyclique du signal avec les noyaux et l'utilisation de la transformée de Fourier rapide. Cette méthode est utilisable aussi pour des indices multiples (image vidéo) via la transformée de Fourier multidimensionnelle.

Lorsque la phase 1 de codage est lancée pour une portion donnée du signal à traiter, une première étape 2 d'initialisation est appliquée. Cette étape 2 initialise l'erreur résiduelle à la valeur de la portion de signal à traiter, soit :

$$\mathbf{e}(t) = \mathbf{s}(t) \tag{6}$$

Durant l'exécution de cette même étape, le compteur $I_m$ est initialisé à zéro pour toute valeur de *m,* avec $m \in [1...M]$. Les coefficients $\alpha_i^m$ de la décomposition sont également initialisés à zéro.

Une étape 3 de recherche des atomes à retenir pour la décomposition du signal est appliquée à la suite de l'étape d'initialisation 2. Pour cela, des convolutions du résidu e(t) avec tous les noyaux $\phi_m(t)$ sont exécutées. Dans le cas multidimensionnel, on utilise le produit scalaire classique entre vecteurs à chaque instant. Les calculs sont alors équivalents à sommer les résultats de la convolution de chaque dimension de e(*t*) avec la dimension associée de $\phi_m(t)$.

Un atome est choisi en retenant le noyau $\phi_m(t)$ associé à une valeur de retard $\tau_i^m$ donnant la valeur absolue la plus grande du produit de convolution. Dans le cas où $\phi_m(t)$ est normé, cette valeur est alors justement le coefficient $\alpha_i^m$. Cette approche fait la distinction entre des signaux similaires sur des directions différentes. Ainsi, pour une application de reconnaissance d'écriture manuscrite, un mouvement horizontal et un mouvement vertical seront associés, par exemple, à deux noyaux « mouvement » distincts. Cette approche est qualifiée d'approche orientée.

Une variante de cette approche pouvant être qualifiée de non orientée permet d'associer à un même noyau des signaux similaires sur des directions différentes. En reprenant l'exemple de la reconnaissance d'écriture manuscrite, un trait vertical et un trait horizontal seront associés à un même noyau « trait », le noyau considéré ayant subi une rotation pour l'association avec un trait vertical ou horizontal. Par rapport à l'approche orientée, chaque noyau subit une rotation particulière lorsqu'il est employé. Le signal après décomposition s'exprime alors :

$$\mathbf{s}(t) = \sum_{m=1}^{M} \sum_{i=1}^{I_m} \alpha_i^m \mathbf{R}_i^m \phi_m\left(t - \tau_i^m\right) + \mathbf{e}(t) \tag{7}$$

$\mathbf{R}_i^m$ étant la matrice représentant la rotation que subit le noyau $\phi_m$ lors de sa $i$ème utilisation. Cela correspond à un nouveau cas particulier de l'expression (4), restreinte aux $j$ tel que $\beta_j$ soit non nul. La famille de tous les atomes $\{\Psi_j(t)_j$ de l'expression (4) correspond ici à la famille $\{\{\{\mathbf{R}.\phi_m(t-\tau)\}_{\mathbf{R}}\}_\tau\}_m$ contenant les résultats de l'application de toutes les rotations possibles et de tous les décalages temporels possibles à chaque noyau. Il est en fait, établit dans (7) des relations de correspondance simplifiant l'écriture de (4) dans ce cas particulier. En effet, on a établit les valeurs $I_m$ $\alpha_i^m$ $\mathbf{R}_i^m$ et $\tau_i^m$ de telle sorte que pour tout indice $j$ de (4) tel que $\beta_j$ soit non nul, il existe $m$, $I_m$, $i \leq_m \alpha_i^m$ $\mathbf{R}_i^m$ et $\tau_i^m$ tel que : $\psi_j(t) = \mathbf{R}_i^m \phi_m(t - \tau_i^m)$ et $\beta_j = \alpha_i^m$.

La matrice $\mathbf{R}_i^m$ est un élément supplémentaire devant être recherché lors de l'étape 3 de recherche des atomes. Dans le cas où l'approche non orientée est utilisée, un atome pourra être défini, par exemple, par un triplet d'éléments composé d'un noyau $\phi_m(t)$, d'un retard $\tau_i^m$ et d'une matrice de rotation $\mathbf{R}_i^m$ pouvant être qualifiée de facteur de rotation.

Différentes méthodes peuvent être mises en place afin de déterminer la matrice $\mathbf{R}_i^m$.

Une première méthode est de tester pour chaque noyau et chaque instant, différentes rotations. Le nombre d'atomes construits à partir d'un noyau unique augmente et le temps nécessaire à la recherche devient important.

Une seconde méthode adaptée aux signaux à deux dimensions permet de réduire cette complexité. Les signaux à deux dimensions sont représentés par des nombres complexes et la phase de codage peut exploiter ce format. Au lieu d'avoir des signaux et des noyaux vectoriels réels à 2 dimensions, on considère plutôt des signaux et des noyaux monodimensionnels complexes. La partie réelle de ces nombres complexes correspond à la dimension 1 et la partie imaginaire à la dimension 2. Les coefficients de décomposition deviennent eux-mêmes complexes. Les normes de ces coefficients correspondent aux $\alpha_i^m$ et les phases aux angles de rotation des matrices $\mathbf{R}_i^m$. L'avantage de cette méthode est double. D'une part, il n'y a pas besoin d'échantillonner les angles de rotation à tester : l'algorithme donne une phase continue. D'autre part, la puissance de calcul requise est seulement doublée par rapport à l'approche orientée. Ce doublement correspond au calcul des corrélations entre parties réelles et imaginaires des signaux, les corrélations entre parties réelles ou entre parties imaginaires étant équivalentes aux corrélations dimension par dimension dans le cas orienté. Le gain est donc significatif par rapport à l'exploration des différentes rotations possibles.

Une troisième méthode possible est adaptée aux signaux à trois dimensions et utilise le principe de la méthode précédente en employant des quaternions à la place des nombres complexes.

La recherche des meilleurs noyaux peut être par ailleurs raffinée en introduisant un mécanisme de gestion de la dilatation temporelle des noyaux. Dans le cas de la reconnaissance de gestes, cette dilatation correspond simplement au fait que les gestes peuvent être exécutés plus ou moins rapidement selon les personnes, voire par une même personne selon le contexte. D'une façon similaire à l'approche non orientée, ce mécanisme de compensation augmente le nombre d'atomes que l'on fabrique à partir d'un noyau, via l'introduction d'un facteur d'échelle. Le signal décomposé s'écrit dans ce cas :

$$\mathbf{s}(t) = \sum_{m=1}^{M} \sum_{i=1}^{I_m} \frac{\alpha_i^m}{\sqrt{a_i^m}} \phi_m\left(\frac{t - \tau_i^m}{a_i^m}\right) + \mathbf{e}(t) \tag{8}$$

$a_i^m$ étant le facteur de dilatation du noyau $\phi_m$ pour sa $i^{\text{ème}}$ utilisation et prenant une valeur réelle positive. Cela correspond à un nouveau cas particulier de l'équation (4), restreinte aux $j$ tel que $\beta_j$ soit non nul. La famille de tous les atomes $\{\Psi_j(t)\}$ $j$ de l'équation (4) correspond ici à la famille $\left\{\left\{\left\{\frac{1}{\sqrt{a}}\phi_m\left(\frac{t-\tau}{a}\right)\right\}_a\right\}_\tau\right\}_m$ qui contient les résultats de l'application de toutes les dilatations possibles et de tous les décalages temporels possibles à chaque noyau. Il est établi dans l'expression (8) des relations de correspondance simplifiant l'écriture de l'expression (4) dans ce cas particulier. En effet, les valeurs $l_m$ $\alpha_i^m$ $a_i^m$ et $\tau_i^m$ sont établies de manière à ce que pour tout indice $j$ de (4) tel que $\beta_j$ soit non nul, il existe $m$, $l_m$, $i \leq l_m$ $\alpha_i^m$ $a_i^m$ et $\tau_i^m$ tel que :

$$\Psi_j(t) = \frac{1}{\sqrt{a_i^m}}\phi_m\left(\frac{t-\tau_i^m}{a_i^m}\right) \text{ et } \beta_j = \alpha_i^m.$$

Cette décomposition implique de tester plusieurs facteurs de dilatation à chaque fois comme pour la rotation. La dilation peut être utilisée dans le cas d'un signal vectoriel, et avec l'approche orientée ou non orientée.

Une étape 4 de mise à jour des coefficients $\alpha_i^m$ est appliquée suite à l'étape de recherche des atomes 3. Les coefficients $\alpha_i^m$ associés à chacun des atomes déjà sélectionnés sont mis à jour.

Une projection orthogonale du signal sur la base composée des atomes déjà sélectionnés est effectuée. Pour cela, le calcul des coefficients peut être fait de deux façons distinctes.

Une première méthode se base sur l'explicitation du projecteur orthogonal sur l'espace engendré par les atomes sélectionnés. Cette méthode est complexe à mettre en oeuvre et mène à des temps de traitements importants. La détermination du projecteur nécessite le calcul de la matrice pseudo-inverse d'une matrice de grande taille. Le calcul de la matrice du projecteur est réalisé dans ce cas après chaque sélection d'un nouvel atome et de façon itérative par l'algorithme de Greville.

Une seconde méthode proposée par Y. Pati et R. Rezaiifar et P. Krishnaprasad dans l'article Orthogonal Matching Pursuit: Recursive Function Approximation with Applications to Wavelet Decomposition, Proceedings of the 27 th Annual Asilomar Conference on Signals, Systems, and Computers, Novembre 1993, utilise la projection orthogonale de l'atome sélectionné à l'itération courante sur le sous espace composé des atomes sélectionnés jusqu'à l'itération précédente. Ainsi, le calcul de la projection sur l'espace composé des L atomes se résume à une mise à jour des $L$-1 coefficients $\alpha_i^m$ des atomes précédemment calculés et au calcul du nouveau coefficient. Cette seconde méthode permet une réduction du temps de calcul de l'ordre de 5 à 20 par rapport au temps nécessaire pour la mise en oeuvre de l'algorithme de Greville en fonction de la taille des signaux et des atomes.

Il est également possible d'utiliser la méthode classique de poursuite adaptative sans projection orthogonale. Le temps de calcul d'une méthode de poursuite adaptative orthogonale est supérieure à l'approche classique mais les résultats obtenus sont largement plus intéressants : pour un groupe d'atomes donné, la version orthogonale garantie la meilleure reconstruction possible, ce que ne fait pas la version classique. En effet, quand les atomes retenus ne sont pas orthogonaux, il y a interactions entre eux. La corrélation entre le résidu e(t) et l'atome n'est alors pas exactement la valeur $\alpha_i^m$ idéale et la reconstruction n'est pas optimale. L'orthogonalisation permet, lors de l'ajout d'un nouvel atome, de corriger les anciens coefficients trouvés pour intégrer les interactions entre les atomes précédemment sélectionnés et le nouveau.

L'étape 5 suivant la mise à jour des coefficients 4 incrémente le compteur $l_m$.

Le résidu est ensuite recalculé 6. Dans le cas classique, c'est en soustrayant à la valeur courante de celui-ci la contribution du signal correspondant au dernier atome sélectionné et à la valeur du coefficient associé $\alpha_i^m$. Dans le cas de la poursuite adaptative orthogonale, le signal reconstruit courant est recalculé à partir des $\alpha_i^m$ courants et est soustrait au signal initial.

Après que les coefficients ont été mis-à-jour, un critère d'arrêt 7 permet de décider si l'exécution de la phase de codage pour la portion du signal en cours de traitement doit s'arrêter ou continuer. Si l'arrêt est décidé, le codage se termine 8. Sinon, la recherche d'atomes et de coefficients associés continue 9 et les étapes précédentes sont appliquées à partir de l'étape de recherche d'atomes 3.

Le critère d'arrêt peut être, par exemple, un nombre maximum d'atomes à sélectionner au delà duquel la phase de codage s'arrête.

Un autre exemple de critère possible est de définir une valeur relative minimale du dernier coefficient $\alpha_i^m$ par rapport à la plus grande valeur des autres coefficients calculés précédemment permettant de décider de l'arrêt de la phase de codage pour la portion de signal en cours de traitement.

Un autre exemple de critère pouvant être mis en place est de définir une valeur seuil du résidu en dessous de laquelle la phase de codage s'arrête pour la portion de signal en cours de traitement.

La figure 2 présente un exemple de diagramme illustrant la phase d'apprentissage du procédé selon l'invention. Comme introduit précédemment, le procédé de traitement selon l'invention comporte une phase de codage et une phase d'apprentissage.

La phase d'apprentissage a pour but de trouver les noyaux pour que la décomposition utilise le moins d'atomes possible tout en minimisant l'erreur résiduelle. Cette phase peut être utilisée à différent moments de l'exécution du procédé en fonction de l'application concernée. Par exemple la phase d'apprentissage peut être exécutée une unique fois avant que la phase de codage soit déclenchée. Un apprentissage régulier peut également être réalisé, une évolution de la prise de décision au cours du temps étant ainsi prise en compte. Enfin, il est possible de réaliser un apprentissage en ligne. Ce dernier cas d'utilisation est particulièrement utile dans le contexte de systèmes évoluant dans le temps et nécessitant par conséquent un apprentissage constant. Une mise en oeuvre de l'apprentissage en ligne dans le cadre, par exemple, d'une application de reconnaissance d'écriture est que lorsque l'utilisateur perçoit que le système de reconnaissance s'est trompé dans sa décision et corrige celle-ci, un réapprentissage des noyaux est déclenché à cet instant.

Après que l'exécution de la phase d'apprentissage a été déclenché 21, une première étape 22 initialise les noyaux $\phi_m$, par exemple par des tirages aléatoires selon un bruit blanc, puis une normalisation. Une autre solution possible serait de partir d'une base prédéfinie utilisée classiquement pour l'application visée. L'apprentissage correspondant alors une spécialisation de la base. On pourrait enfin partir des deux, c'est-à-dire initialisé a priori certains noyaux par l'expertise et initialisé des noyaux supplémentaires par un bruit blanc.

Une base de données 24 contenant un ensemble de signaux d'apprentissage est utilisée pour adapter la valeur des noyaux. Pour cela, le codage 23 d'un de ces signaux d'apprentissage, c'est-à-dire sa décomposition, est réalisé en utilisant, par exemple, la méthode décrite précédemment à l'aide de la figure 1. Le codage est d'abord réalisé avec les noyaux $\phi_m$ initialisés à l'étape précédente 22. Comme indiqué précédemment, le résultat du codage est un ensemble de n_uplets. Chaque n-uplets est au moins constitué du triplet $(m, \alpha_i^m, \tau_i^m)$ correspondant à la première décomposition décrite dans l'expression (5). Selon les variantes de décomposition, il peut également contenir une matrice de rotation $R_i^m$ comme dans l'expression (6) et/ou un coefficient de dilatation $a_i^m$ comme dans l'expression (7), ou plus généralement tous paramètres de transformations supplémentaires à appliquer au noyau pour fabriquer l'atome. Le processus étant itératif, le codage s'effectuera ensuite avec les derniers noyaux disponibles.

L'intérêt de l'étape de codage est de pouvoir tester l'efficacité du codage sur les signaux de la base d'apprentissage lorsque les noyaux courants sont utilisés. Cette efficacité est testée, par exemple, en vérifiant la valeur du résidu $e(t)$ 26 après codage.

En fonction de l'estimation du résidu 25, les noyaux sont adaptés 26. Une méthode classique permettant d'adapter les noyaux de la transformée utilise la méthode de la descente du gradient. Cette méthode a pour but de déterminer les noyaux $\phi_m$ minimisant une fonction de coût. Une fonction de coût correspond à une application mathématique à valeur réelle qui permet d'évaluer les performances d'un modèle paramétré, selon un certain critère. Ainsi en minimisant la fonction de coût, on détermine les paramètres du meilleur modèle. Le minimum est habituellement 0. Ici, les paramètres sont les noyaux et le critère va traduire l'adéquation entre les signaux observés et l'hypothèse qu'ils sont constitués à partir de quelques noyaux. En d'autres termes, la fonction de coût représente la capacité des noyaux à bien reconstruire les signaux de la base de données tout en garantissant une décomposition parcimonieuse du signal source. La fonction de coût est, par exemple, l'opposé du logarithme de la fonction de vraisemblance du signal conditionnellement à la base de noyaux, soit $-\log[P(s|\Phi)]$ avec $\Phi$ représentant l'ensemble des noyaux. Dans le cas d'une hypothèse gaussienne sur le bruit et d'un code très creux, Smith et Lewicki on montré que cette log-vraisemblance pouvait être approchée dans le cas monodimensionnelle par :

$$-\log P(s|\mathbf{\Phi}) \approx \frac{1}{2\sigma_e}\left(s(t) - \sum_{m=1}^{M}\sum_{i=1}^{I_m}\alpha_i^m\phi_m\left(t - \tau_i^m\right)\right)^2 = \frac{1}{2\sigma_e}e(t)^2$$

Sous ces hypothèses, l'opposée de la log-vraisemblance du signal conditionnellement à la base de noyaux est, à un facteur multiplicatif près, similaire à l'erreur quadratique moyenne qui est une autre fonction de coût classique en apprentissage.

Cette fonction est minimisée en adaptant les noyaux d'une valeur proportionnelle au gradient de la fonction.

La convergence de cet algorithme de recherche peut être améliorée en utilisant l'algorithme de Levenberg-Marquart connu de l'homme du métier à la place d'une descente de gradient stochastique classique. Sur le principe, l'algorithme de Levenberg-Marquart passe par une approximation du Hessien de la fonction à optimiser. Le Hessien d'une fonction est la matrice carrée des dérivées secondes de ladite fonction. Dans le cas présent, la fonction est la fonction de coût et les dérivations se font par rapport à chaque échantillon de chaque noyau. De manière à réduire la complexité des calculs, l'algorithme de Levenberg-Marquart simplifie le Hessien de manière à obtenir une matrice diagonale. Cela signifie que les dérivées croisées de la matrice sont négligées. Une approximation supplémentaire est faite : une valeur moyenne pour chaque noyau est considérée, c'est à dire que la dérivée seconde sera identique pour tous les échantillons d'un même noyau et sera notée comme la dérivée seconde par rapport au noyau.

Si les atomes utilisés issus d'un même noyau sont totalement différenciés, c'est-à-dire que les écarts entre deux retards $\tau_i^{m}$ successifs sont supérieurs à la durée du noyau $T_m$, les dérivées secondes de la fonction de coût ici utilisée s'écrivent simplement :

$$-\frac{\partial^2}{\partial \phi_m^{2}} \log P(s|\mathbf{\Phi}) = \frac{1}{\sigma_e} \sum_{i=1}^{I_m} \alpha_i^{m\,2} \tag{9}$$

La différenciation totale des atomes issus d'un même noyau n'étant pas toujours vérifiée, le Hessien est alors sous-estimé, générant un pas local trop important et donc des instabilités durant l'apprentissage.

De manière à identifier toutes les situations de recouvrement, les décalages $\tau_i^{m}$ sont triés tels que $\tau_1^{m}<\tau_2^{m}<\tau_3^{m}<...<\tau_1^{m}<\tau_{i+1}^{m}<...<\tau_{Im}^{m}$. Ainsi toutes les situations de recouvrement peuvent être identifiées grâce à un ensemble $\mathbf{J}_m$ défini ci-dessous :

$$\mathbf{J}_m = \left\{ i \in \left[1..I_m - 1\right] \middle| \tau_{i+1}^{m} - \tau_i^{m} < T_m \right\} \tag{10}$$

Les dérivées croisées seront alors non nulles pour tous les noyaux ayant un ensemble $\mathbf{J}_m$ non vide. De manière à tenir compte du recouvrement entre atomes issus d'un même noyau ayant pour conséquence une non homogénéité des dérivées secondes de chaque noyau, le Hessien est homogénéisé par une surestimation s'exprimant, par exemple, de la manière suivante :

$$-\frac{\partial^2}{\partial \phi_m^{2}} \log P(s|\mathbf{\Phi}) = \frac{1}{\sigma_e} \left[ \sum_{i=1}^{I_m} \alpha_i^{m\,2} + \sum_{j\in\mathbf{J}_m} 2\frac{T_m - \left(\tau_{j+1}^{m} - \tau_j^{m}\right)}{T_m} \middle| \alpha_j^{m}.\alpha_{j+1}^{m} \middle| \right] \tag{11}$$

Bien que tendant à surestimer le Hessien, l'équation (10) possède des propriétés limites intéressantes. Si l'écart entre deux utilisations consécutives du noyau est toujours supérieur ou égal à $T_m$, la formule (8) sera retrouvée. Si le recouvrement est très faible, les doubles produits influencent peu le Hessien. Enfin, si la contribution d'un noyau à un instant donné est artificiellement scindée en plusieurs contributions d'amplitudes de même signe, le Hessien sera strictement le même grâce aux doubles produits pondérés par $T_m/T_m=1$.

Les noyaux sont alors adaptés de manière itérative 26 en utilisant la formule finale suivante :

$$\phi_m^{k+1}(t)\Big|_{t=[0..T_m]} = \phi_m^{k}(t)\Big|_{t=[0..T_m]} + \frac{\sum_{i=1}^{I_m} \alpha_i^{m}\left[s(t) - \sum_{m=1}^{M}\sum_{i=1}^{I_m} \alpha_i^{m}\phi_m^{k}\left(t-\tau_i^{m}\right)\right]\Big|_{t=\left[\tau_i^{m}..\tau_i^{m}+T_m\right]}}{\lambda + \sum_{i=1}^{I_m} \alpha_i^{m\,2} + \sum_{j\in\mathbf{J}_m} 2\frac{T_m - \left(\tau_{j+1}^{m} - \tau_j^{m}\right)}{T_m}\Big|\alpha_j^{m}.\alpha_{j+1}^{m}\Big|} \tag{12}$$

$\lambda$ étant le terme régulateur de l'algorithme de Levenberg-Marquardt, et les coefficients $\alpha_i^{m}$ ayant été déterminés lors de l'étape de codage 23

Il est possible d'améliorer la robustesse de la phase d'apprentissage en utilisant la technique RProp dite méthode de propagation résistante, plus connue sous la terminologie anglo-saxonne de « resilient propagation ». Celle-ci est proche de la descente de gradient mais le gradient n'est plus utilisé en tant que tel : seul son signe est pris en compte associé à une valeur fixe de pas. Les phénomènes d'instabilités dus à des gradients largement surestimés à cause du bruit sont alors évités.

Suite à l'étape d'évaluation des noyaux 26, il est vérifié que tous les signaux de la base d'apprentissage ont été traités 27. Si ce n'est pas le cas 30, les étapes de codage 23, de test du résidu 25 et d'évaluation des noyaux 26 sont appliquées sur un autre signal d'apprentissage de la base. Si tous les signaux ont été traités 31, un critère d'arrêt permet de décider de terminer la phase d'apprentissage 29 ou bien de réitérer les calculs 32 sur l'ensemble des signaux de la base d'apprentissage. Ce critère d'arrêt est, par exemple, une valeur seuil de la moyenne de la norme du résidu en dessous de laquelle il est considéré que les noyaux trouvés permettent un codage suffisamment efficace.

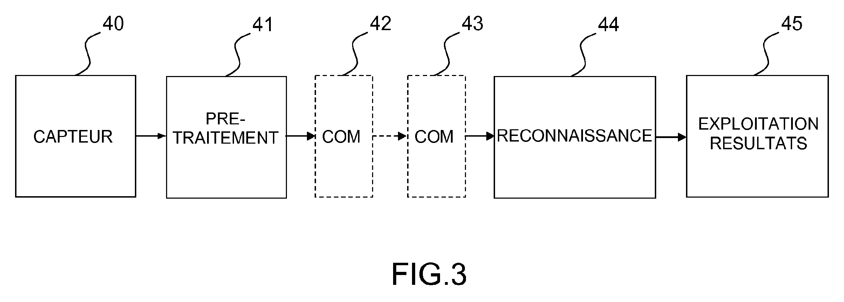

La figure 3 présente un exemple de système de reconnaissance mettant en oeuvre le procédé. Le système comporte notamment un capteur ou un réseau de capteurs 40 produisant en sortie des données ou signaux monodimensionnels ou multidimensionnels. Il comporte également un module de prétraitement 41 mettant en oeuvre le procédé selon l'invention et permettant d'exécuter les phases d'apprentissage et de codage du procédé. Les noyaux utilisés par le module de prétraitement sont appris à partir d'une base de données ou de signaux propres à l'application visée.

Les données ou les signaux décomposés par le module de prétraitement sont ensuite exploités par un module de reconnaissance 44. Ce module permet de réaliser des fonctions d'analyse et/ou de détection et/ou de reconnaissance de formes. Les éventuels paramètres du module de reconnaissance sont appris, par exemple, à partir d'une base d'exemples associant des classes au codage résultant du procédé sur des données ou des signaux.

Le résultat de la reconnaissance 44 est ensuite transmis à un module d'exploitation des résultats 45 permettant, par exemple, d'afficher ces résultats ou de déclencher une alarme en fonction du ou des évènements détectés par le module de reconnaissance 44.

Le système peut comporter en outre un ou plusieurs modules de communications 42, 43 permettant de réaliser les diverses fonctions du système sur des équipements physiques distants. Par exemple, un module de communication 42 pourra transmettre les résultats du prétraitement, notamment les coefficients associés aux atomes retenus pour la décomposition des signaux ou données à traiter, à un équipement distant comprenant un module de communication 43 permettant de recevoir ces coefficients et de les traiter 44, 45. Dans cet exemple, le codage 41 est fait proche du capteur 40, mais la reconnaissance est faite ailleurs pour pouvoir par exemple disposer de plus de puissance de calcul ou de mémoire. Les modules de communication 42, 43 peuvent être placés à d'autre endroits de la chaîne de traitement, comme par exemple, entre le module de reconnaissance 44 et le module d'exploitation des résultats 44, 45.

Une variante du système peut, par exemple, utiliser un module de stockage des résultats du prétraitement 41. Dans cet exemple, un premier équipement comportant les capteurs 40 et le module de prétraitement 41 pourra écrire les résultats du prétraitement dans un module de stockage connecté à l'équipement. Le module de stockage pourra ensuite être connecté à un équipement réalisant la reconnaissance 44 et l'exploitation des résultats 45, ce dernier équipement étant distant du premier.

**Revendications**

1. Procédé de reconnaissance de formes comportant au moins un mécanisme de prétraitement décomposant un signal source en composantes élémentaires appelées atomes et un mécanisme de reconnaissance se basant sur le résultat de la décomposition réalisée par le mécanisme de prétraitement, ledit procédé étant **caractérisé en ce que** le signal source comprend N dimensions, ledit mécanisme traitant plusieurs dimensions du signal source conjointement et comportant au moins :

   - une phase d'apprentissage aboutissant à un ensemble de signaux appelés noyaux et composés d'échantillons indexés, lesdits noyaux étant adaptés (26) de manière à minimiser une fonction de coût correspondant à l'opposé du logarithme de la fonction de vraisemblance du signal conditionnellement à l'ensemble des noyaux;
   - une phase de codage permettant de décomposer le signal source en atomes, lesdits atomes étant générés par décalages et rotation des noyaux trouvés lors de la phase d'apprentissage et étant ainsi composé d'un noyau, d'un index de décalage et d'un facteur de rotation, chacun desdits atomes étant associé à un coefficient de décomposition ($\alpha_1$).

2. Procédé selon la revendication 1 **caractérisé en ce que** durant la phase de codage, le facteur de rotation des noyaux est un matrice carrée représentant la rotation appliquée à chaque noyau sélectionné, les éléments de ladite matrice étant déterminés durant la phase de codage du procédé en prenant plusieurs hypothèses de rotation pour chaque noyau et chaque instant dans le but de sélectionner la meilleure hypothèse de rotation.

**3.** Procédé selon la revendication 1 **caractérisé en ce que** le procédé traite un signal source à deux dimensions et que ledit signal ainsi que les noyaux de la transformée sont représentés par des nombres complexes, la partie réelle de ces nombres complexes correspondant à la première dimension et la partie imaginaire correspondant à la seconde dimension, ledit procédé étant **caractérisé en outre par le fait que** les coefficients de décompositions sont également complexes de manière à ce que leur phase représente le facteur de rotation et permettent d'appliquer un angle de rotation aux noyaux.

**4.** Procédé selon la revendication 1 **caractérisé en ce que** le procédé traite des signaux à trois dimensions et que lesdits signaux ainsi que les noyaux de la transformée sont représentés par des quaternions, ledit procédé étant **caractérisé en outre par le fait que** les coefficients de décompositions sont également des quaternions et permettent d'appliquer une rotation 3D aux noyaux.

**5.** Procédé selon l'une quelconque des revendications précédentes **caractérisé en ce que** les formes à reconnaître représentatives de mouvements ou de gestes sont des caractères ou des suites de caractères d'écriture manuscrite.

**6.** Procédé selon l'une quelconque des revendications précédentes **caractérisé en ce que** la phase de codage met en oeuvre une méthode de poursuite de base.

**7.** Procédé selon l'une quelconque des revendications 1 à 5 **caractérisé en ce que** la phase de codage met en oeuvre une méthode de poursuite adaptative.

**8.** Procédé selon l'une quelconque des revendications précédentes **caractérisé en ce qu'**en début de phase d'apprentissage, une étape initialise les noyaux par des tirages aléatoires de bruit blanc.

**9.** Procédé selon l'une quelconque des revendications précédentes **caractérisé en ce que** pendant la phase d'apprentissage, les noyaux sont adaptés (26) en minimisant la fonction de coût sur la base de données de signaux représentatifs de la source à traiter (24) grâce à une méthode de descente de gradient stochastique.

**10.** Procédé selon l'une quelconque des revendications précédentes **caractérisé en ce que** pendant la phase d'apprentissage, les noyaux sont adaptés (26) en minimisant la fonction de coût sur la base de données de signaux représentatifs de la source à traiter (24) grâce à l'algorithme de Levenberg-Marquart, ledit algorithme étant appliqué suite au calcul d'un Hessien moyen pour chacun desdits noyaux.

**11.** Procédé selon l'une quelconque des revendications précédentes **caractérisé en ce que** pendant la phase d'apprentissage, les noyaux sont adaptés (26) en minimisant la fonction de coût sur la base de données de signaux représentatifs de la source à traiter (24) grâce à la méthode de descente de gradient par propagation résistante.

**12.** Système de reconnaissance de formes mettant en oeuvre le procédé selon l'une quelconque des revendications 1 à 11 et **caractérisé en ce qu'**il comporte au moins :

- un capteur ou un réseau de capteurs (40) produisant en sortie des signaux monodimensionnels ou multidimensionnels ;
- un module de prétraitement (41 mettant en oeuvre le procédé selon l'invention et permettant d'exécuter les phases d'apprentissage et/ou de codage dudit procédé ;
- un module de reconnaissance (44) permettant de réaliser des fonctions d'analyse et/ou de détection et/ou de reconnaissance de formes ;
- un module d'exploitation des résultats (45).

**13.** Système de reconnaissance de formes selon la revendication 12 **caractérisé en ce qu'**il comporte un ou plusieurs modules de communications (42, 43) permettant d'implanter les autres modules du système (40, 41, 44, 45) sur au moins deux équipements physiques distants et leurs permettant d'échanger leurs résultats.

**14.** Système de reconnaissance de formes selon la revendication 12 **caractérisé en ce qu'**il comporte au moins un module de stockage connecté au module de prétraitement (41), les résultats dudit prétraitement pouvant être mémorisés dans le module de stockage et le module de stockage pouvant être déconnecté du module de traitement pour être connecté au module de reconnaissance (44) situé sur un équipement distant pour que les résultats du prétraitement y soient exploités.

**Patentansprüche**

1. Verfahren zum Erkennen von Formen, umfassend wenigstens einen Vorverarbeitungsmechanismus, der ein Quellsignal in Elementarkomponenten, Atome genannt, zerlegt, und einen Erkennungsmechanismus auf der Basis des Ergebnisses der von dem Vorverarbeitungsmechanismus durchgeführten Zerlegung, wobei das Verfahren **dadurch gekennzeichnet ist, dass** das Quellsignal N Dimensionen hat, wobei der Mechanismus gemeinsam mehrere Dimensionen des Quellsignals verarbeitet und wenigstens Folgendes beinhaltet:

   - eine Lernphase, die einen Satz von Signalen ergibt, die Kerne genannt werden und aus indexierten Samples zusammengesetzt sind, wobei die Kerne so ausgelegt (26) sind, dass sie eine Kostenfunktion entsprechend dem Gegenteil des Logarithmus der Wahrscheinlichkeitsfunktion des Signals in Abhängigkeit von dem Satz von Kernen minimiert;
   - eine Codierungsphase, die es zulässt, das Quellsignal in Atome zu zerlegen, wobei die Atome durch Verschiebungen und Rotation der Kerne in der Lernphase erzeugt werden und somit aus einem Kern, einem Verschiebungsindex und einem Rotationsfaktor zusammengesetzt sind, wobei jedes der Atome mit einem Zerlegungskoeffizienten ($\alpha_i$) assoziiert ist.

2. Verfahren nach Anspruch 1, **dadurch gekennzeichnet, dass** in der Codierungsphase der Rotationsfaktor der Kerne eine quadratische Matrix ist, die die auf jeden gewählten Kern angewandte Rotation repräsentiert, wobei die Elemente der Matrix in der Codierungsphase des Verfahrens durch Annehmen mehrerer Rotationshypothesen für jeden Kern und jeden Moment bestimmt werden, um die beste Rotationshypothese auszuwählen.

3. Verfahren nach Anspruch 1, **dadurch gekennzeichnet, dass** das Verfahren ein Quellsignal mit zwei Dimensionen verarbeitet, und dadurch, dass das Signal sowie die Kerne der Transformation durch komplexe Zahlen repräsentiert werden, wobei der reale Teil dieser komplexen Zahlen der ersten Dimension entspricht und der imaginäre Teil der zweiten Dimension entspricht, wobei das Verfahren ferner **dadurch gekennzeichnet ist, dass** die Zerlegungskoeffizienten ebenfalls komplex sind, so dass ihre Phase den Rotationsfaktor repräsentiert und das Anwenden eines Rotationswinkels auf die Kerne zulässt.

4. Verfahren nach Anspruch 1, **dadurch gekennzeichnet, dass** das Verfahren Signale mit drei Dimensionen verarbeitet, und dadurch, dass die Signale sowie die Kerne der Transformation durch Quaternione repräsentiert werden, wobei das Verfahren ferner **dadurch gekennzeichnet ist, dass** die Zerlegungskoeffizienten ebenfalls Quaternione sind und das Anwenden einer 3D-Rotation auf die Kerne zulassen.

5. Verfahren nach einem der vorherigen Ansprüche, **dadurch gekennzeichnet, dass** die zu erkennenden Formen, die Bewegungen oder Gesten repräsentieren, handschriftliche Zeichen oder Zeichensätze sind.

6. Verfahren nach einem der vorherigen Ansprüche, **dadurch gekennzeichnet, dass** die Codierungsphase eine Basisverfolgungsmethode implementiert.

7. Verfahren nach einem der Ansprüche 1 bis 5, **dadurch gekennzeichnet, dass** die Codierungsphase eine adaptive Verfolgungsmethode implementiert.

8. Verfahren nach einem der vorherigen Ansprüche, **dadurch gekennzeichnet, dass** zu Beginn der Lernphase ein Schritt die Kerne durch Zufallswahlen von weißem Rauschen initialisiert.

9. Verfahren nach einem der vorherigen Ansprüche, **dadurch gekennzeichnet, dass** in der Lernphase die Kerne durch Minimieren der Kostenfunktion auf der Basis von Signaldaten, die die zu verarbeitende Quelle (24) repräsentieren, unter Anwendung einer stochastischen Gradientenabstiegsmethode adaptiert (26) werden.

10. Verfahren nach einem der vorherigen Ansprüche, **dadurch gekennzeichnet, dass** in der Lernphase die Kerne durch Minimieren der Kostenfunktion auf der Basis von Signaldaten, die die zu verarbeitende Quelle (24) repräsentieren, unter Anwendung des Levenberg-Marquart-Algorithmus adaptiert (26) werden, wobei der Algorithmus nach der Berechnung eines Hesse-Mittels für jeden der Kerne angewandt wird.

11. Verfahren nach einem der vorherigen Ansprüche, **dadurch gekennzeichnet, dass** in der Lernphase die Kerne durch Minimieren der Kostenfunktion auf der Basis von Signaldaten, die die zu verarbeitende Quelle (24) repräsentieren, unter Anwendung eines Widerstandspropagation-Gradientenabstiegsverfahrens adaptiert (26) werden.

**12.** System zum Erkennen von Formen, das das Verfahren nach einem der Ansprüche 1 bis 11 implementiert und **dadurch gekennzeichnet ist, dass** es wenigstens Folgendes umfasst:

- einen Sensor oder eine Gruppe von Sensoren (40), der/die am Ausgang ein- und mehrdimensionale Signale produziert;
- ein Vorverarbeitungsmodul (41), das das Verfahren gemäß der Erfindung implementiert und das Ausführen der Lern- und/oder Codierungsphasen des Verfahrens zulässt;
- ein Erkennungsmodul (44), das die Durchführung von Analyse- und/oder Detektions- und/oder Formerkennungsfunktionen zulässt;
- ein Modul (45) zum Auswerten der Ergebnisse.

**13.** System zum Erkennen von Formen nach Anspruch 12, **dadurch gekennzeichnet, dass** es ein oder mehrere Kommunikationsmodule (42, 43) umfasst, die es zulassen, dass die anderen Module (40, 41, 44, 45) des Systems auf wenigstens zwei physischen Ferngeräten installiert werden und ihre Ergebnisse austauschen.

**14.** System zum Erkennen von Formen nach Anspruch 12, **dadurch gekennzeichnet, dass** es wenigstens ein Speichermodul umfasst, das mit dem Vorverarbeitungsmodul (41) verbunden ist, wobei die Ergebnisse der Vorverarbeitung im Speichermodul gespeichert werden können und das Speichermodul vom Verarbeitungsmodul abgetrennt werden kann, um mit dem auf einem Ferngerät befindlichen Erkennungsmodul (44) verbunden zu werden, so dass die Ergebnisse der Vorverarbeitung auf demselben ausgewertet werden können.


**Claims**

**1.** A method for recognising shapes, comprising at least one pre-processing mechanism decomposing a source signal into elementary components called atoms, and a recognition mechanism based on the result of the decomposition carried out by said preprocessing mechanism, said method being **characterised in that** said source signal comprises N dimensions, said mechanism jointly processing a plurality of dimensions of said source signal and comprising at least:

- one learning phase resulting in a set of signals called cores and made up of indexed samples, said cores being adapted (26) so as to minimise a cost function corresponding to the opposite of the logarithm of the likelihood function of the signal as a function of the set of cores;
- one coding phase allowing said source signal to be decomposed into atoms, said atoms being generated by shifts and rotations of the cores found during said learning phase and thus being made up of a core, a shift index and a rotation factor, each of said atoms being associated with a decomposition coefficient ($\alpha_i$).

**2.** The method according to claim 1, **characterised in that**, during said coding phase, the rotation factor of the cores is a square matrix representing the rotation applied to each selected core, the elements of said matrix being determined during said coding phase of said method by assuming a plurality of rotation hypotheses for each core and each instant in order to select the best rotation hypothesis.

**3.** The method according to claim 1, **characterised in that** said method processes a two-dimensional source signal and **in that** said signal, as well as the cores of the transform, are represented by complex numbers, with the real part of said complex numbers corresponding to the first dimension and the imaginary part corresponding to the second dimension, said method being further **characterised in that** the decomposition coefficients are also complex, so that their phase represents the rotation factor and allows an angle of rotation to be applied to the cores.

**4.** The method according to claim 1, **characterised in that** said method processes three-dimensional signals and **in that** said signals, as well as the cores of the transform, are represented by quaternions, said method being further **characterised in that** the decomposition coefficients are also quaternions and allow a 3D rotation to be applied to the cores.

**5.** The method according to any one of the preceding claims, **characterised in that** the shapes to be recognised that represent movements or gestures are handwritten characters or sets of characters.

**6.** The method according to any one of the preceding claims, **characterised in that** said coding phase implements a base tracking procedure.

**7.** The method according to any one of claims 1 to 5, **characterised in that** said coding phase implements an adaptive tracking procedure.

**8.** The method according to any one of the preceding claims, **characterised in that**, at the start of said learning phase, a step initialises the cores by random selections of white noise.

**9.** The method according to any one of the preceding claims, **characterised in that**, during said learning phase, said cores are adapted (26) by minimising the cost function on the basis of signal data representing the source to be processed (24) using a stochastic gradient descent procedure.

**10.** The method according to any one of the preceding claims, **characterised in that**, during said learning phase, said cores are adapted (26) by minimising the cost function on the basis of signal data representing the source to be processed (24) using the Levenberg-Marquart algorithm, said algorithm being applied following the computation of a Hessian mean for each of said cores.

**11.** The method according to any one of the preceding claims, **characterised in that**, during said learning phase, said cores are adapted (26) by minimising the cost function on the basis of signal data representing the source to be processed (24) using the resistant propagation gradient descent procedure.

**12.** A system for recognising shapes, implementing the method according to any one of claims 1 to 11 and **characterised in that** it comprises at least:

- one sensor or one array of sensors (40) producing mono-dimensional or multi-dimensional signals as output;
- one pre-processing module (41) implementing the method according to the invention and allowing the learning and/or coding phases of said method to be executed;
- one recognition module (44) allowing analysis and/or detection and/or shape recognition functions to be carried out;
- one module (45) for using the results.

**13.** The system for recognising shapes according to claim 12, **characterised in that** it comprises one or more communication modules (42, 43) allowing the other modules (40, 41, 44, 45) of said system to be installed on at least two items of remote physical equipment and allowing them to exchange their results.

**14.** The system for recognising shapes according to claim 12, **characterised in that** it comprises at least one storage module connected to said pre-processing module (41), the results of said pre-processing being able to be stored in said storage module and said storage module being able to be disconnected from said processing module in order to be connected to said recognition module (44) located on a remote item of equipment, so that the results of the pre-processing can be used by said equipment.

FIG.1

FIG.2

EP 2 321 769 B1

| CAPTEUR | → | PRE-TRAITEMENT | → | COM | ⇢ | COM | → | RECONNAISSANCE | → | EXPLOITATION RESULTATS |

40  41  42  43  44  45

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006106508 A

**Littérature non-brevet citée dans la description**

- **E.C. SMITH ; M.S. LEWICKI.** Efficient coding of time-relative structure using spikes. *Neural Computation,* 2005, vol. 17, 19-45
- Efficient auditory coding. *Nature,* 2006, vol. 439 (23), 978-982
- **Y. PATI ; R. REZAIIFAR ; P. KRISHNAPRASAD.** Orthogonal Matching Pursuit: Recursive Function Approximation with Applications to Wavelet Decomposition. *Proceedings of the 27 th Annual Asilomar Conference on Signals, Systems, and Computers,* Novembre 1993